## Europäisches Patentamt
## European Patent Office
## Office européen des brevets

(11) Publication number: **0 100 684**
**A2**

(12) ## EUROPEAN PATENT APPLICATION

(21) Application number: **83304466.2**

(22) Date of filing: **02.08.83**

(51) Int. Cl.³: **G 05 B 19/417**

(30) Priority: **02.08.82 JP 134863/82**

(43) Date of publication of application:
**15.02.84 Bulletin 84/7**

(84) Designated Contracting States:
**DE FR GB**

(71) Applicant: **FANUC LTD**
**5-1, Asahigaoka 3-chome Hino-shi**
**Tokyo 191(JP)**

(72) Inventor: **Inaba, Hajimu**
**5-3-16, Asahigaoka**
**Hino-shi Tokyo(JP)**

(72) Inventor: **Ono, Yukio**
**968, Kamikurata-cho Totsuka-ku**
**Yokohama-shi Kanagawa(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **Cell control apparatus and method.**

(57) A cell control system wherein a central control unit centrally controls a plurality of work cells connected thereto, each cell being composed of at least a numerically controlled machine and an industrial robot. A cell controller including an interface unit is provided between each work cell and the central control unit, and the cell controller is adapted to sequentially control the numerically controlled machine and the industrial robot in the corresponding work cell. In addition to providing the sequential control information, the central control unit provides each work cell with information indicative of an activity to be performed by the cell and is operable to grasp the progress of the activity upon receiving such information from the corresponding cell controller.

Fig. 2

EP 0 100 684 A2

-1-

# CELL CONTROL APPARATUS AND METHOD

This invention relates to a cell control apparatus and method in which a plurality of work cells, each of which includes at least a numerically controlled machine tool and an industrial robot, are connected to a central control unit for controlling the work cells. More particularly, the invention relates to a cell control apparatus and method which make it possible to raise the efficiency at which work cells are controlled.

A variety of factory automation systems have been developed in recent years for the purpose of achieving unmanned operation of manufacturing processes. Such systems include at least one so-called "work cell", such as a machining cell or assembly cell. By way of example, a machining cell comprises an industrial robot, a numerically controlled machine tool, and a device for automating the operation, such as a monitor. In a typical automation system, unmachined workpieces are conveyed to the machining cell, the industrial robot picks up the unmachined workpieces one at a time and loads each workpiece onto the machine tool which then proceeds to machine the workpiece in a prescribed manner. When the machining operation is completed, the robot takes the completed workpiece from the machine tool and carries it to a predetermined location. These steps are repeated as often as required.

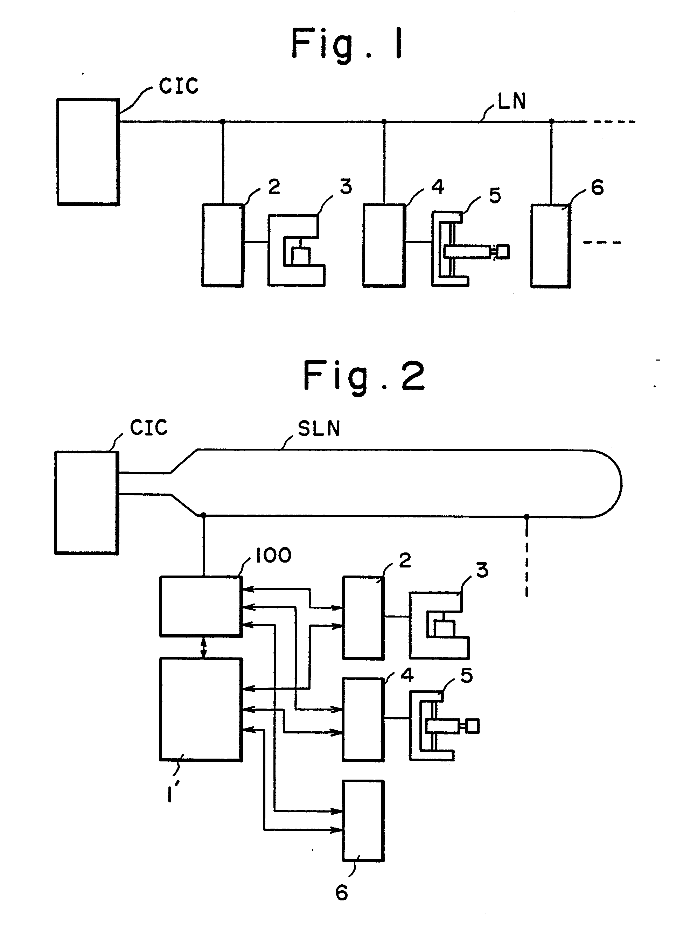

Attempts have been made to connect a number of the foregoing machining cells to a computer to automate an entire factory. One example of the prior art is shown in Fig. 1, in which a machining cell includes a numerical control unit 2 for controlling a machine tool 3, a robot control unit 4 for controlling a robot 5, and a monitor 6. The control units 2 and 4 and the monitor 6 are connected to a computer CIC through a line LN, and are controlled sequentially by the computer to execute a desired activity. While this arrangement may suit a small-scale factory, a plant of ordinary size would require a large number of such machining cells to be connected to the computer CIC, increasing its load substantially. The disadvantageous result is a reduction in the rapidity of control and, hence, a decline in the working efficiency of the machining cells. The difficulty in achieving smooth control becomes even more pronounced owing to a further increase in the computer burden when carrying out production control and process modification through use of the computer.

Accordingly, an object of the present invention is to provide a cell control system through which it is possible to enhance cell control efficiency and achieve decentralized cell control.

Another object of the present invention is to provide a cell control system wherein sequence control for implementing the activities performed within a cell is carried out by an individual cell controller provided for that cell, whereas a central control unit is devoted to overall control of the cells in the plant as whole, thereby making it possible to automate the plant with excellent overall efficiency.

According to the present invention, the foregoing objects are attained by providing a cell control system wherein a central control unit centrally controls a plurality of work cells connected thereto, each cell being composed of at least a numerically controlled machine and an industrial robot. A cell controller including an interface unit is provided between each work cell and the central control unit, and the cell controller is adapted to sequentially control the numerically controlled machine and the industrial robot in the corresponding work cell. In addition to providing the sequential control information, the central control unit provides each work cell with information indicative of an activity to be performed by the cell and is operable to grasp the progress of the activity upon receiving such information from the corresponding cell controller. Each work cell includes a monitor for monitoring the operation of the cell. If a work cell malfunctions, the monitor so informs the corresponding cell controller having a processor which responds by producing a command for halting the operation of the cell.

Other features and advantages of the present invention will be apparent from the following description taken in conjunction with the accompanying drawings, in which like reference characters designate the same or similar parts throughout the figures thereof.

Fig. 1 is a schematic view showing the arrangement of a cell control system according to the prior art;

Fig. 2 is a schematic view showing the arrangement of a cell control system embodying the present invention;

Fig. 3 is a block diagram of an interface unit included in the system of Fig. 2;

Fig. 4 is a block diagram of a cell controller included in the system of Fig. 2; and

Fig. 5 is a front view showing the face of a control panel.

With reference to Fig. 2, the cell control system according to the present invention includes the computer CIC, which serves as a central control unit for controlling a group of cells. The central control unit CIC generates information indicating the activity that is to be performed by each cell, of which only one is shown, receives signals from each cell indicating the progress of the activity performed by that cell, and is capable of grasping the progress of the overall plant operation. A serial loop line SLN is a loop of cables connecting the central control unit CIC with each of the cells in the plant. An interface unit 100, which is included in a cell controller 1', described below, is connected to the serial loop line SLN for supervising the exchange of information between each unit in the cell with which the interface unit 100 is associated, and the central controller CIC through the serial loop line SLN. The cell controller 1' is connected to the numerical control unit 2, robot control unit 4 and monitor 6 for sequentially controlling the same.

The foregoing is a description of a single machining cell and the associated interface unit and cell controller. In a typical plant or factory, a plurality of such cells will be connected to the serial loop line SLN, each cell having its own interface unit and cell controller.

In operation, assume that the cell controller 1' has completed preparatory processing for an activity by suitably controlling the numerical control unit 2, robot control unit 4 and monitor 6. With the completion of the preparatory processing, the cell controller 1' sends a signal indicative of the fact to the serial loop line SLN via the interface unit 100 to inform the central controller CIC. The arrangement is such that the signal enters a vacant slot within the serial loop line SLN so that the signal in said slot is received at the designated destination. The central controller CIC sends information which indicates the activity for that day, such as part number and quantity, to the interface unit 100 through the serial loop line SLN, and the interface unit 100 feeds the information into the designated numerical control unit 2 and robot control unit 4. Thereafter, the cell controller 1' performs sequence processing to sequentially control the numerical control unit 2, robot control unit 4 and monitor 6, whereby a supplied part is machined through the cooperation of the machine tool 3 and robot 5. Conversely, whenever an activity is completed, the numerical control unit 2 and robot control unit 4 issue a signal indicative of the fact. These signals, serving as information indicating the state of the activity performed by the cell, are applied to the serial loop line SLN through the interface unit 100 for communication to the central control unit CIC. In this manner, the central control unit CIC is capable of grasping the progress of the activity being performed.

The central control unit CIC also provides the numerical control unit 2 and robot control unit 4 with their control programs, which specify the contents of the particular activity. This makes it possible to modify the activity performed by the machine tool 3 and robot 5. More specifically, the central control unit CIC delivers a control program to the interface unit 100 through the serial loop line SLN, and the interface unit 100 loads the program into the internal memory of the numerical control unit 2 or the internal memory of robot control unit 4 in the cell which has been designated.

The function of the interface unit 100 and cell controller 1' will now be described in further detail.

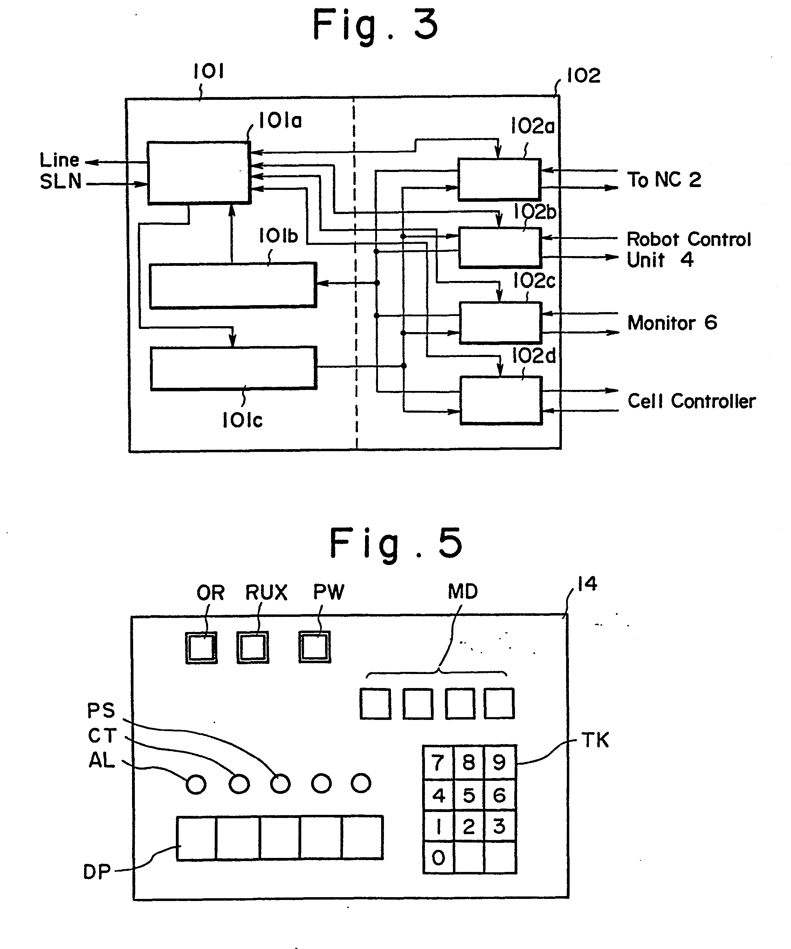

The interface unit 100, the details of which are shown in the block diagram of Fig. 3, comprises a network processor 101 and an interface controller 102. The network processor 101 includes a network controller 101a connected to the serial loop line SLN, an output buffer 101b for storing data delivered to the serial loop line SLN, and an input buffer 101c for storing data received from the serial loop line SLN. When information on the seral loop line SLN indicates an address of a device connected to the corresponding interface unit 100, the network controller 101a inserts the information into the input buffer 101c. The interface unit 100 is also operative to sense a vacant slot in the serial loop line SLN and deliver data from the output buffer 101b. The interface controller 102 includes interface circuits 102a, 102b, 102c for supervising the exchange of signals in accordance with RS-232c standards, and an interface circuit 102d for supervising the exchange of signals in accordance with a DI/DO interface. The interface circuits 102a, 102b, 102c are connected to the numerical control unit 2, robot control unit 4 and monitor 6, respectively, of the corresponding cell.

The interface unit 100 operates in the following manner. When an item of data on the serial loop line SLN is identified by the network controller 101a as being data which includes the address of a device connected to the network controller, the data is fed into the input buffer 101c and the interface circuit 102a, 102b, 102c or 102d corresponding to the address is selected. The interface circuit selected in this manner exchanges control signals with the numerical control unit 2, robot control unit 4, monitor 6 or cell controller 1' connected thereto, in accordance with RS-232c (full duplex transmission procedure) or a DI/DO (contact interface procedure) interface, thereby to feed the data from the input buffer 101c to the device connected to the selected interface circuit. Conversely, when a transmission request from the connected device is applied to the corresponding interface circuit 102a, 102b, 102c or 102d in order for data to be sent out on the serial loop line SLN, the interface circuit concerned exchanges control signals in accordance with the aforementioned prescribed interface standards, receives the data from the device and feeds the data into the output buffer 101b. In addition, the network controller 101a selects a vacant slot in the serial loop line SLN and delivers the data from the output buffer 101b to the serial loop lined SLN.

Thus, the interface unit 100 is capable of collectively feeding different signals in accordance with plural interface standards into a data transmission line, and is also capable of connecting devices having different interface standards to a data transmission line through a single interface unit.

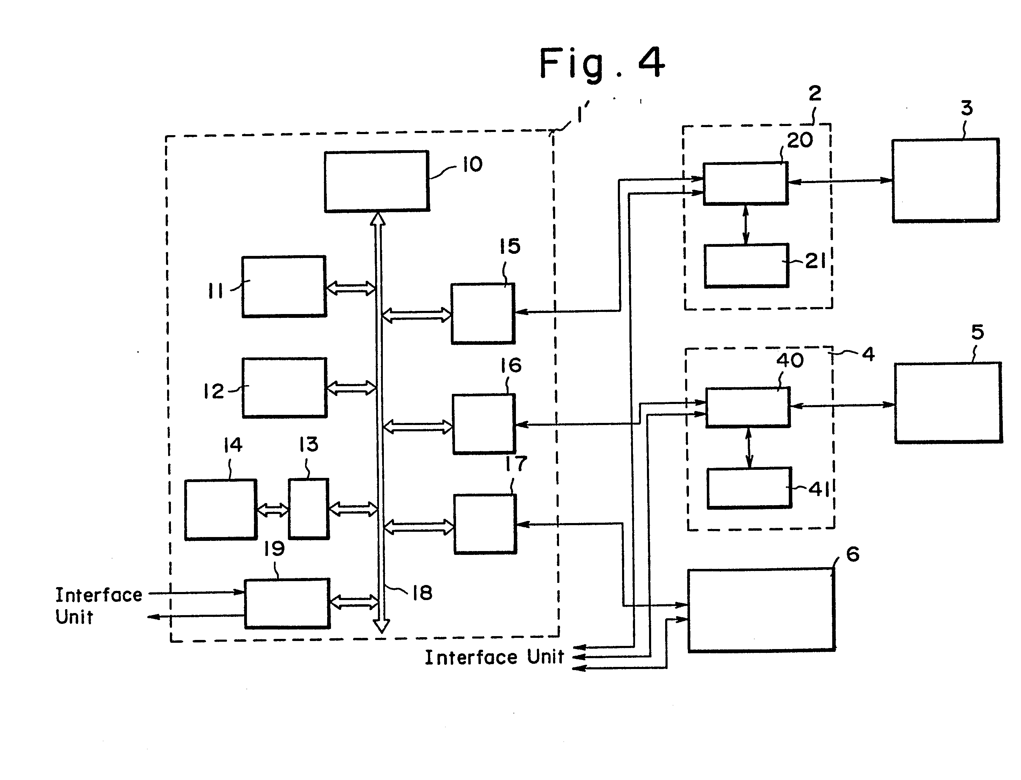

Reference will now be had to the block diagram of Fig. 4 to describe the cell controller 1'. The cell controller 1' includes a processor 10 for executing the processing prescribed by a control program, and a program memory 11 for storing the control program. According to the present invention, the control program includes (1) a program for introducing and cutting off power from a power supply, (2) an initialization processing program, (3) a program for setting the contents of an activity performed by a cell, and (4) a sequence program for the activity to be performed by the cell. Also provided are a data memory 12 for storing the results of the processing performed by the processor 10, an input/output port 13, and a control panel 14.

The control panel 14, the front surface of which is shown in Fig. 5, includes a power supply switch PW by which a command is issued to supply power to or cut off power from each of the devices in the corresponding cell, an initializing switch OR by which the devices are commanded to return to a zero point, namely a coordinate system origin, a run switch RUN for issuing a command in response to which which the devices are set into operation, a number of mode switches MD for designating an input mode, and a ten-key arrangment TK for entering numerical values. Input modes available include a mode for entering the number of times an activity is to be performed, a mode for selecting a program, etc. After the mode switch MD corresponding to the desired mode is pressed, the desired numerical value may be entered using the ten-key arrangement. The control panel 14 is further provided with various display means. These include a numerical value display DP for displaying input and output data, an alarm indicator AL for indicating an alarm output, an operating mode indicator CT which lights when the input mode is the mode for entering the number of times an operation is to be performed, and a selection mode indicator PS which lights when the input mode is the program selection mode. The numerical value which prevails when the indicator AL, CT or PS is activated is displayed on the numerical value display DP.

Returning to Fig. 4, the cell controller 1' further includes input/output ports 15, 16, 17 connected to the numerical control unit 2, robot control unit 4 and monitor 6, respectively, an address/data bus 18 for interconnecting the foregoing components 10 through 17, and an interface circuit 19, which is also connected to the bus 18. The interface circuit 19 is connected to the interface circuit 102d of the interface unit 100, shown in Fig. 3, for supervising an exchange of data. The numerical control unit 2 includes a controller 20 for numerically controlling the machine tool 3 in the cell, and a memory 21 for storing, e.g., numerical control data. The robot control unit 4 includes a controller 40 for controlling the robot in the cell, and a memory 41 for storing, e.g., control data.

The operation of the cell controller 1 illustrated in Fig. 4 will now be described in terms of the processing associated with the abovementioned four programs constituting a control program.

(1) Processing for introduction and removal of power

When the operator presses the power supply switch PW, a signal for introduction of electric power is applied to the processor 10 through the input/output port 13 and bus 18. The processor 10 responds by reading the program for introduction and removal of power out of the program memory 11, and by executing the program. Specifically, to introduce power to the robot control unit 4 and robot 5, the processor 10 executes the program and delivers a command for introduction of power to the robot control unit 4 through the bus 18 and input/output port 16, whereby power is supplied to the robot control unit 4 and robot 5. When the operation for introducing power to the robot control unit 4 and robot 5 is completed, the robot control unit 4 sends a signal indicative of the fact to the processor 10 through the input/output port 16 and bus 18. The processor 10 responds by confirming the introduction of power, and then by delivering a power introduction command to the monitor 6 through the bus 18 and input/output port 17, so that power is supplied to the monitor. The monitor 6 has various functions, such as detecting whether there is an excessive load upon the spindle motor of the machine tool 3, and providing a visual indication of the output of a dimension measuring sensor provided on the machine tool 3. When the introduction of power to the sensor 6 is completed, the monitor sends a signal indicative of the fact to the processor 10 through the input/output port 17, whereby the introduction of power is confirmed. Finally, the processor 10 delivers a power introduction command to the numerical control unit 2 through the bus 18 and input/output port 15, in response to which the numerical control unit 2 and machine tool 3 are supplied with power. When this operation is completed, the numerical control unit 2 sends the appropriate signal to the processor 10 through the input/output port 15 and bus 18, ending the power introduction sequence. Whenever the signal indicating completion of the power introduction operation is not received a prescribed length of time

0100684

-13-

after issuance of the power introduction command, the processor 10, acting through the bus 18 and input/output port 13, lights the alarm indicator AL on the control panel 14 and causes a corresponding alarm code to be displayed on the numerical value display DP for visual confirmation by the operator. When power is to be cut off, the operator presses the power switch PW again. The processor 10 responds by sending a power removal command to the robot control unit 4, monitor 6 and numerical control unit 2 sequentially in the order which is the reverse to that described above. The units 2, 4 and 6, instead of issuing the power introduction completion signal, respond by producing a signal indicating that the power removal command has been received. When the processor 10 receives this signal from one unit, is sends the power removal command to the next unit until the sequence ends.

(2) Initialization processing

When the operator presses the initialization switch OR upon completion of the power introduction sequence, an initialization signal is sent to the processor 10 through the input/output port 13 and bus 18, the processor 10 responding by reading and executing the initialization processing program stored in the program memory 11. Specifically, the processor 10 sends an origin return command to the robot control unit 4 through the bus 18 and input/output port 16, whereby the robot control unit 4 returns the robot 5 to the origin of the robot coordinate system. Next, the processor 10 sends an origin return command to the numerical control unit 2 through the bus 18 and input/output port 15, whereby the control unit 2 returns the machine tool 3 to the origin of its coordinate system. Lastly, the processor 10 sends a clear command to the monitor 6 through the bus 18 and input/output port 17, thereby clearing the monitor.

It should be noted that the execution of the initialization processing may be implemented automatically, namely without pressing the switch OR, after the introduction of power executed as described above. The processing for the introduction of power and for initialization is referred to as preparatory processing.

(3) Processing for setting contents of activity performed by cell

Following the preparatory processing, machine tool and robot programs are selected so that the cell may execute the activity planned for that day. The memory 41 of the robot control unit 4 and the memory 21 of the numerical control unit 2 each store a plurality of control programs for corresponding activities. To select a program, the operator presses the mode switch MD corresponding to the program selection mode, and then enters the desired program number by using the ten-key arrangement TK. These operations cause the selection mode indicator PS to light and the entered program number to be displayed on the numerical value display DP. They also cause a selected mode command and the program number to be sent to the processor 10 through the input/output port 13 and bus 18, the processor responding by going to the program memory 11, reading the program for setting the contents of an activity out of the program memory 11, and executing the program. More specifically, the processor 10 sends the program number to the numerical control unit 2 and robot control unit 4 through the bus 18 and input/output ports 15, 16, and the controllers 20, 40 go to the respective memories 21, 41 to select the machine tool program and robot program corresponding to the program number.

Next, the operator enters the number of times an activity is to be performed, namely the number of parts to be machined, in accordance with the schedule for that day. Ordinarily, the controller 40 of the robot control unit 4 counts the number of times the activity is performed.

Accordingly, the operator presses the mode switch MD corresponding to the mode for entering the number of times the activity is to be performed, thereby designating said mode, and then enters the number using the ten-key arrangement TK. These operations cause the operating mode indicator PS to light and the entered number to be displayed on the numerical display DP. They also cause an operating mode command and the

-16-

entered number to be sent to the processor 10 through the input/output port 13 and bus 18, the processor responding by going to the program memory 11, reading the program for setting the contents of an activity out of the program memory 11, and executing the program. More specifically, the processor 10 sends the entered number to the robot control unit 4 through the bus 18 and input/output port 16, and the controller 40 stores the entered number in the memory 41, this number then serving as the commanded number of times the activity is to be performed.

(4) Sequence processing

When the foregoing processing is completed and the operator presses the run switch RUN, an activity start command is sent to the processor 10 through the input/output port 13 and bus 18. In response, the processor 10 goes to the program memory 11, reads a sequence program out of the memory, and successively executes the program. Specifically, the processor 10 applies the activity start command to the robot control unit 4 through the bus 18 and input/output port 16, and the robot control unit 4 controls the robot 5 by executing the control program which the controller 40 selected from the memory 41, as described above. For example, assume that the robot 5 is instructed to grasp a part and carry the part to the chuck of the machine tool 3. When this has been performed, the robot control unit 4 sends a signal, which indicates the completion of the foregoing operation, to the processor 10 through the input/output port 16 and bus 18. The processor 10 then sends an activity command to the numerical control unit 2 through the bus 18 and input/output port 15. The numerical control unit 2 controls the machine tool 3 by executing the control program which the controller 20 selected from the memory 21, as already described, whereby the machine tool machines the part loaded in its chuck by the robot 5. In the meantime, the monitor 6 monitors the operation performed by machine tool 3 and, in the event of an abnormality, communicates this fact to the processor 10 through the input/output port 17 and bus 18. The processor 10 responds by sending an activity stop command to the numerical control unit 2 through the bus 18 and input/output port 15, thereby halting the operation being performed by the machine tool 3. The processor 10 also acts through the bus 18 and input/output port 13 to light the alarm indicator AL on the control panel 14 and to display the corresponding alarm code on the numerical value display DP of the control panel.

When the machine tool 3 finishes machining the part, the numerical control unit 2 sends the completion signal to the processor 10 through the input/output port 15 and bus 18, and the processor 10 responds by applying an activity command to the robot control unit 4 through the bus 18 and input/output port 16. Within the robot control unit 4, the controller 40 executes the control program stored in the memory 41, thereby controlling the robot 5. The latter responds by unloading the machined part from the machine tool 3 and carrying the part to a predetermined location, such as a pallet, where the part is received. When this has been accomplished, the robot control unit 4 sends a completion signal to the processor 10 through the input/output port 16 and bus 18. Next, the processor 10 repeats the foregoing operations by sending the activity start command to the robot control unit 4.

As mentioned above, the robot control unit 4 is adapted to count the number of times an activity is performed. At the completion of each activity, the counted number is compared with the commanded number set in the memory 41 as described above. When the counted number and the commanded number agree, the robot control unit 4 sends an activity end signal to the processor 10 through the input/output port 16 and bus 18. From this point onward, the processor 10 will not perform sequence processing until the next activity start command arrives. The processor 10, acting through the bus 18 and input/output port 13, also causes an appropriate indictor on the control panel 14 to light to inform the operator that the activity has ended.

It should be noted that status of the machine tool and robot arrangements can be monitored centrally by the control panel 14 by utilizing the foregoing signals indicating completion of an activity. Specifically, when a completion signal is received by the processor 10, the latter acts through the bus 18 and input/output port 13 and causes the numerical display DP on the control panel 14 to display the progress of the activity in the form of a numerical value. The number of times an activity is performed is displayed on the control panel 14 in a similar manner.

The commands and control programs from the central control unit CIC are applied to the interface circuit 19 of the cell controller 1', the controller 20 of the numerical control unit 2, the controller 40 of the robot control unit 4, and to the monitor 6. Conversely, the aforementioned completion signals are sent to the central control unit CIC through the interface unit 100 so that the central control unit may grasp the status of the production process.

Thus, as described hereinabove, the present invention provides a cell control system of the type in which a central control unit centrally controls a plurality of work cells connected thereto, each cell being composed of at least a numerically controlled machine and an industrial robot. According to a feature of the invention, a cell controller including an interface unit is provided between each work cell and the central control unit, and the cell controller is adapted to sequentially control the numerically

-20-

controlled machine and the industrial robot that constitute the corresponding work cell. Accordingly, sequence control for the activity performed by the cell is executed by the cell controller provided exclusively for that cell, so that the cell can be controlled rapidly and efficiently. In addition, the central control unit can devote itself to the overall control of the work cells constituting the plant, making it possible to supervise the activity of the plant as a whole without bearing an excessively heavy burden. The end result is a factory automation system exhibiting an excellent overall efficiency.

As many apparently widely different embodiments of the present invention can be made without departing from the spirit and scope thereof, it is to be understood that the invention is not limited to the specific embodiments thereof except as defined in the appended claims.

CLAIMS.

1.    A cell control apparatus comprising:

a plurality of work cells each composed of at least a numerically controlled machine and an industrial robot;

a central control unit connected to said plurality of work cells for centrally controlling the same; and

a cell controller provided between said central control unit and each of said plurality of work cells for sequentially controlling the numerically controlled machine and the industrial robot in the corresponding work cell.

2.    The cell control apparatus according to claim 1, wherein said cell controller includes an interface unit interposed between said central control unit and the corresponding work cell.

3.    A cell control apparatus comprising:

a plurality of work cells each composed of at least a numerically controlled machine, an industrial robot and a monitor for monitoring the operation of said numerically controlled machine and of said industrial robot;

a central control unit connected to said plurality of work cells for centrally controlling the same; and

a cell controller provided between said central control unit and each of said plurality of work cells for sequentially controlling the numerically controlled machine and the industrial robot in the corresponding work cell and for halting the operation of said work cell when said work cell malfunctions.

4. A cell control method wherein a central control unit centrally controls a plurality of work cells each of which is composed of at least a numerically controlled machine and an industrial robot, comprising the steps of:

sequentially controlling the numerically controlled machine and the industrial robot in each work cell by a cell controller provided between the central control unit and each work cell, and

applying activity instruction information other than sequence control information to the plurality of work cells and grasping the progress of activities upon receiving activity status information from the cell controller associated with each work cell, this being performed by said central control unit.

Fig. 1

CIC

LN

2

3

4

5

6

Fig. 2

CIC

SLN

100

2

3

1'

4

5

6

# Fig. 3

Line ← | SLN → | 101a | 102a → To NC 2

101 | 102

101b | 102b → Robot Control Unit 4

101c | 102c → Monitor 6

102d → Cell Controller

# Fig. 5

OR   RUX   PW        MD                    14

PS
CT
AL

DP

TK

7 8 9
4 5 6
1 2 3
0

# Fig. 4